# EUROPÄISCHE PATENTSCHRIFT

(11) **EP 1 268 151 B1**
(45) Veröffentlichungstag und Bekanntmachung des Hinweises auf die Patenterteilung: **04.02.2004**
(21) Anmeldenummer: 01913855.1
(22) Anmeldetag: 09.03.2001
(51) Int. Cl.: B29B 7/76, B29C 67/24

(54) **UMLENK-MISCHKOPF FÜR EINE REAKTIONSGIESSMASCHINE**
DEFLECTOR MIXER HEAD FOR A REACTION MOULDING MACHINE
TETE DE MELANGE DEFLECTRICE DESTINEE A UNE MACHINE POUR MOULAGE PAR REACTION

(30) Priorität: 25.03.2000 DE 10014972
(43) Veröffentlichungstag der Anmeldung: 02.01.2003
(73) Patentinhaber: Krauss-Maffei Kunststofftechnik GmbH, 80997 München (DE)
(72) Erfinder: EHRLICHER, Stefan, 80997 München (DE)
(74) Vertreter: Zollner, Richard
(86) Internationale Anmeldenummer: PCT/EP2001/002671
(87) Internationale Veröffentlichungsnummer: WO 2001/072491

(56) Entgegenhaltungen:
- EP-A- 0 447 883
- DE-A- 2 941 975
- DE-A- 3 213 153
- DE-A- 4 316 380
- JP-A- 7 040 337
- JP-A- 9 131 520
- US-A- 4 773 564
- US-A- 5 443 797

## Beschreibung

Die Erfindung bezieht sich auf einen Umlenk-Mischkopf für eine Reaktionsgießmaschine, nach dem Oberbegriff des Patentanspruchs 1.

Aus der DE 32 08 696 A1 ist ein Linear-Mischkopf bekannt, bei dem die über einander diametral gegenüberliegende Pralldüsen der Mischkammer zugeführten Reaktionskomponenten zur Erzielung eines Drossel-und eines verbesserten Durchmischungseffekts an in die Mischkammer einführbaren Staukörpern vorbeiströmen, bevor sie in die der Mischkammer unmittelbar nachgeschaltete Formkavität der Reaktionsgießmaschine gelangen.

Mit Umlenk-Mischköpfen hingegen, wie sie etwa aus der DE 40 09 465 A1 bekannt sind, wird ein wesentlich homogenerer Gemischaustrag dadurch erzielt, dass der Mischkammer eine zu dieser im Winkel angeordnete, als Beruhigungszone wirkende Auslaufkammer nachgeschaltet ist und diese entweder in zwei nacheinander vom Reaktionsgemisch durchströmte, ebenfalls im Winkel zueinander angeordnete Einzelkammern unterteilt ist, um so eine nochmalige Gemischumlenkung zu erreichen, oder - wie bei dem Umlenk-Mischkopf der eingangs genannten Art - an der mischkammerseitigen Eintrittsöffnung der Auslaufkammer mit Hilfe des in dieser reversierbar angeordneten Reinigungskolbens zugleich mit der Gemischumlenkung eine variable Gemischdrosselung erzielt wird. Mit derartigen Umlenk-Mischköpfen ergibt sich für die meisten Reaktionssysteme ein hoher Durchmischungsgrad. Bei schwer mischbaren Systemen kann es jedoch zu örtlichen Gemisch-Inhomogenitäten kommen, die aus Qualitätsgründen nicht hingenommen werden können.

Aus der DE 32 13 153 A1 ist ein Mischkopf bekannt, bei dem die Mischkammer und die Auslaufkammer achsparallel zueinander angeordnet sind. Zwischen der Mischkammer und der Auslaufkammer sind quer zu deren Achsen Überströmöffnungen vorgesehen, durch die das Reaktionsgemisch von der Mischkammer in die Auslaufkammer strömen kann. In diese Überströmöffnungen können zur Verbesserung des Durchmischungsgrades Drosselorgane ein- und ausgefahren werden.

Aus der gattungsbildenden US 5,443,797 ist ein Umlenk-Mischkopf gemäß dem Oberbegriff von Patentanspruch 1 bekannt.

Aufgabe der Erfindung ist es, die Mischeigenschaften eines Umlenk-Mischkopfes der eingangs genannten Art auf baulich einfache Weise so zu verbessern, dass selbst für schwer mischbare Reaktionssysteme eine konstant hohe, homogene Durchmischung garantiert wird.

Diese Aufgabe wird erfindungsgemäß durch die Merkmale des Patentanspruchs 1 gelöst.

Erfindungsgemäß wird durch die besondere Gestaltung der Verbindungskammer auf dem Wege zwischen Misch- und Auslaufkammer mit den darin im Strömungspfad angeordneten Umlenkelementen ein zusätzlicher, intensiver Mischeffekt mit einer mehrfachen Stromteilung und -zusammenführung an den Umlenkelementen erzielt und dadurch sichergestellt, dass selbst sehr schwer mischbare Reaktionskomponenten zu einem homogenen Reaktionsgemisch verarbeitet werden, mit dem weiteren, für eine gleichbleibend homogene Gemischzusammensetzung wesentlichen Aspekt, dass die Verbindungskammer am Schussende mittels des Verdrängerkolbens vollständig entleert wird, so dass im Zusammenwirken mit dem Steuer- und dem Reinigungskolben keine Gemischrückstände im Mischkopf verbleiben.

Um den Strömungspfad durch die Verbindungskammer zu verlängern und so den Durchmischungsgrad mit einer entsprechend vergrößerten Anzahl von Umlenkelementen weiter zu verbessern, ist die Verbindungskammer nach Anspruch 2 in besonders bevorzugter Weise einlassseitig auf der der Auslaufkammer gegenüberliegenden Seite an die Mischkammer angeschlossen.

Eine weitere, besonders bevorzugte Ausgestaltung der Erfindung besteht nach Anspruch 3 darin, dass die Verbindungskammer über einen vom Reinigungskolben veränderlich einstellbaren Ringspalt in die Auslaufkammer mündet, so daß der Komponentenzustrom an den Umlenkelementen in Umfangsrichtung des Ringspalts gleichförmig verteilt ist. Hierdurch ergibt sich zum einen ein stark beruhigter, laminarer Gemischaustrag und zum anderen die Möglichkeit, die Drosselwirkung des Ringspalts individuell an den jeweiligen Gemischstrom anzupassen.

In ebenfalls besonders bevorzugter Weise ist die Scherwirkung des Umlenk-Mischkopfes nach Anspruch 4 dadurch variabel einstellbar, dass die Verbindungskammer einen durch entsprechende Hubpositionierung des Verdrängerkolbens veränderlichen Strömungsquerschnitt aufweist, so dass sich für Reaktionssysteme, die für eine gute Vermischung sehr hohe Scherkräfte benötigen, die Querschnittshöhe der Verbindungskammer durch Absenken des Verdrängerkolbens sehr klein und die Scherwirkung dementsprechend hoch einstellen lässt, während andererseits durch Anheben des Verdrängerkolbens der Durchflussquerschnitt der Verbindungskammer vergrößert und dadurch die Scherwirkung sehr klein gehalten wird und so auch extrem scherempfindliche Reaktionssysteme schonend, aber dennoch mit intensiver Durchmischung verarbeitet werden können.

Im Hinblick auf eine baulich besonders einfache Ausgestaltung sind die Umlenkelemente nach Anspruch 5 vorzugsweise bewegungsfest mit dem Verdrängerkolben verbunden und im Gleit- und Dichtsitz in korrespondierenden Aufnahmebohrungen in der dem Verdrängerkolben gegenüberliegenden Begrenzungswand der Verbindungskammer geführt.

Aus Gründen einer möglichst gleichförmigen Durchströmung der Verbindungskammer empfiehlt es sich schließlich nach Anspruch 6, als Umlenkelemente von der Ein- zur Auslassseite der Verbindungskammer im Durchmesser abnehmende, anzahlmäßig aber zunehmende versetzt gestaffelte Mischstifte vorzusehen.

Weitere Merkmale der Erfindung ergeben sich aus der nachfolgenden, beispielsweisen Beschreibung in Verbindung mit den Zeichnungen. Diese zeigen in stark schematisierter Darstellung:
- **Fig. 1**: einen Längsschnitt eines erfindungsgemäß ausgebildeten Umlenk-Mischkopfes in der Schussphase;
- **Fig. 2**: einen Schnitt des Umlenk-Mischkopfes nach Fig. 1 längs der Linie II-II; und
- **Fig. 3**: eine der Fig. 1 entsprechende Darstellung des Umlenk-Mischkopfes in der Reinigungsphase.

Der in den Fig. gezeigte Umlenk-Mischkopf enthält eine Mischkammer 2, in die die Reaktionskomponenten im Wege einer Prallmischung über einander diametral gegenüberliegende Zufuhrdusen 4, 6 einströmen, eine an die Mischkammer 2 anschließende Verbindungskammer 8, deren Mittelachse unter einem rechten Winkel zur Mischkammerachse verläuft, sowie eine auf der der Mischkammer 2 gegenüberliegenden Seite achsparallel exzentrisch der Verbindungskammer 8 nachgeschaltete, allseitig von dieser umschlossene Auslaufkammer 10.

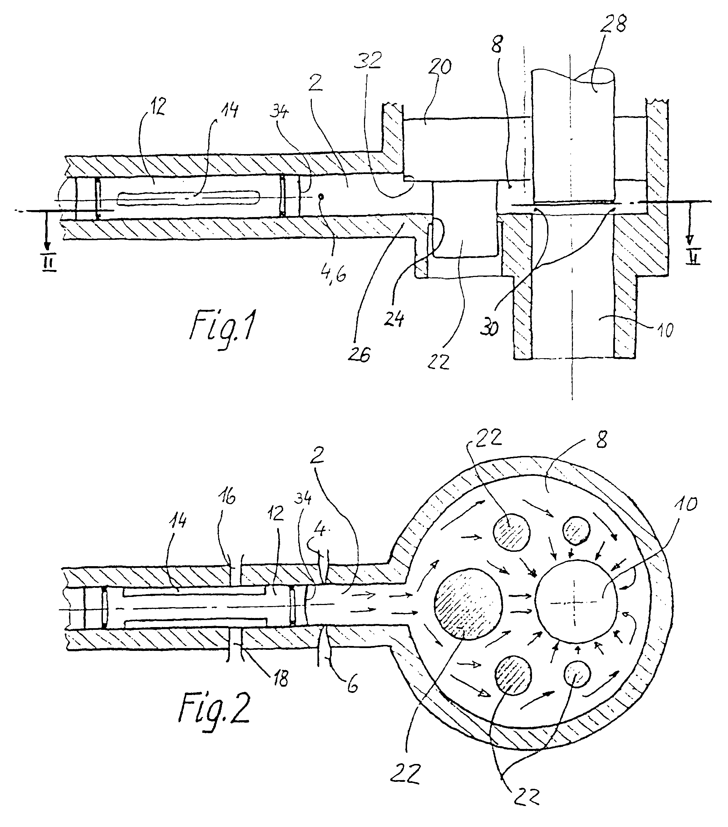

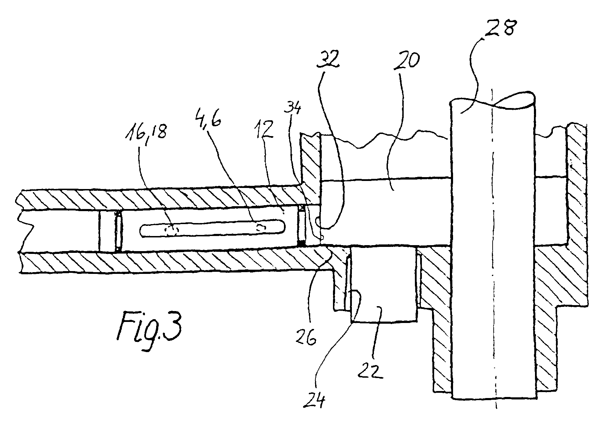

Gesteuert wird der Komponentenzustrom durch einen in der Mischkammer 2 hubbeweglich angetriebenen Steuerkolben 12, der sich in der Schussphase in der Rückhublage (Fig. 1) befindet und dadurch die Zufuhrdüsen 4, 6 freigibt. Nach Schussende wird der Steuerkolben 12 in die vordere Endposition vorgefahren (Fig. 3), wodurch die Mischkammer 2 vollständig entleert wird und die Zufuhrdüsen 4, 6 über voneinander getrennte Rezirkulationskanäle 14 im Steuerkolben 12 mit entsprechenden Rezirkulationsöffnungen 16, 18 der Mischkammer 2 in Verbindung gebracht werden.

Die Verbindungskammer 8 wird durch einen hubbeweglich angetriebenen Verdrängerkolben 20 begrenzt, an welchem eine Reihe von Umlenkelementen 22 in Form von zylindrischen Mischstiften befestigt ist, die im engen Gleit- und Dichtsitz in entsprechende Aufnahmebohrungen 24 auf der dem Verdrängerkolben 20 gegenüberliegenden Begrenzungswand 26 der Verbindungskammer 8 eingreifen.

Der der Auslaufkammer 10 zugeordnete Reinigungskolben 28, der den Verdrängerkolben 20 dichtend durchdringt und unabhängig von diesem hubbeweglich steuerbar ist, begrenzt gemeinsam mit dem einlassseitigen Ende der Auslaufkammer 10 einen Ringspalt 30, dessen Spalthöhe durch entsprechende Hubpositionierung des Reinigungskolbens 28 veränderlich einstellbar ist.

Wie aus Fig. 2 durch die Richtungspfeile angedeutet ist, wird der an den Zufuhrdüsen 4, 6 vorgemischte Komponentenstrom an den Mischstiften 22 mehrfach geteilt und wieder zusammengeführt und dadurch intensiv durchmischt und gleichzeitig mit im wesentlichen radialer Strömungsrichtung in Umfangsrichtung des Ringspalts 30 gleichförmig verteilt. Dies wird durch eine entsprechende Positionierung und Staffelung der Mischstifte 22 mit in Strömungsrichtung abnehmendem Mischstift-Durchmesser erreicht.

Das den Ringspalt 30 durchströmende Reaktionsgemisch wird in Axialrichtung in die Auslaufkammer 10 umgelenkt und gelangt von dort als laminar beruhigter Gemischaustrag in die nachgeordnete Formkavität.

Zusätzlich zur variablen Drosselung am Ringspalt 30 lässt sich durch eine Hubjustierung des Verdrängerkolbens 20 die Drosselwirkung der Mischkammer 2 an der Anströmkante 32 des Verdrängerkolbens 20 veränderlich einstellen. Gleichzeitig wird hierdurch die Durchflusshöhe und damit die Scherwirkung im Bereich der Verbindungskammer 8 verändert. So wird der Verdrängerkolben 20 für ein extrem scherempfindliches Reaktionssystem auf die obere Hubposition eingestellt und dadurch der Durchflussquerschnitt der Verbindungskammer 8 sehr groß gewählt, während für Systeme, die für eine gute Vermischung hohe Scherkräfte benötigen, die Durchflusshöhe der Verbindungskammer 8 klein gewählt wird.

Nach dem Schussende erfolgt die Reinigungsphase, in der zunächst der Steuerkolben 12 in die in Fig. 3 gezeigte Position vorgeschoben und dadurch die Mischkammer 2 vollständig entleert wird, woraufhin der Verdrängerkolben 20 bis zum Anschlag an der Begrenzungswand 26 und unter formgleicher Anlage der Anströmkante 32 am stirnseitigen Ende des Steuerkolbens 12 zum vollständigen Gemischaustrag aus der Verbindungskammer 8 verfahren und anschließend die Auslaufkammer 10 durch den Reinigungskolben 28 entleert wird, so dass am Ende der Reinigungsphase (Fig. 3) kein Restvolumen im Mischkopf verbleibt. Aufgrund der freien Zugänglichkeit der Mischstifte 22 können eventuelle Gemischleckagen an den Aufnahmebohrungen 24 auf einfache Weise von außen entfernt werden.

## Patentansprüche

1. Umlenk-Mischkopf für eine Reaktionsgießmaschine, mit einer Mischkammer (2) einschließlich eines den Komponentenzustrom regulierenden Steuerkolbens (12) und einer der Mischkammer (2) nachgeschalteten, quer zu dieser angeordneten Auslaufkammer (10) mit einem die mischkammerseitige Zulauföffnung der Auslaufkammer (10) auf- und zusteuernden Reinigungskolbens (28), wobei zwischen der Misch- und der Auslaufkammer (2, 10) eine zur Auslaufkammer (10) im wesentlichen achsparallele Verbindungskammer (8) mit einem parallel zum Reinigungskolben (28) hubbeweglichen Verdrängerkolben (20) zum Entleeren der Verbindungskammer (8) angeordnet ist,
**dadurch gekennzeichnet,**
**dass** im Strömungspfad zwischen Ein- und Auslaßseite der Verbindungskammer (8) positionierte Umlenkelemente (22) angeordnet sind.

2. Umlenk-Mischkopf nach Anspruch 1.
**dadurch gekennzeichnet,**
**dass** die Verbindungskammer (8) einlassseitig auf der der Auslaufkammer gegenüberliegenden Seite an die Mischkammer (2) angeschlossen ist.

3. Umlenk-Mischkopf nach Anspruch 1 oder 2
**dadurch gekennzeichnet,**
**dass** die Verbindungskammer (8) über einen vom Reinigungskolben (28) veränderlich einstellbaren Ringspalt (30) in die Auslaufkammer (10) mündet.

4. Umlenk-Mischkopf nach einem der vorhergehenden Ansprüche,
**dadurch gekennzeichnet, dass**
der Verdrängerkolben (20) zur variablen Steuerung des Strömungsquerschnitts der Verbindungskammer (8) in Hubrichtung veränderlich einstellbar ist.

5. Umlenk-Mischkopf nach einem der vorhergehenden Ansprüche,
**dadurch gekennzeichnet, dass**
die Umlenkelemente (22) bewegungsfest mit dem Verdrängerkolben (20) verbunden und im Gleitund Dichtsitz in korrespondierenden Aufnahmebohrungen (24) in der dem Verdrängerkolben gegenüberliegenden Begrenzungswand (26) der Verbindungskammer (8) geführt sind.

6. Umlenk-Mischkopf nach einem der vorhergehenden Ansprüche,
**dadurch gekennzeichnet, dass**
als Umlenkelemente (22) in Strömungsrichtung von der Ein- zur Auslassseite der Verbindungskammer (8) im Durchmesser abnehmende, anzahlmäßig aber zunehmende, versetzt gestaffelte Mischstifte vorgesehen sind.

7. Umlenk-Mischkopf nach einem der vorhergehenden Ansprüche,
**dadurch gekennzeichnet, dass**
der Durchmesser des vor der Auslassöffnung der Mischkammer (2) angeordneten Umlenkelementes (22) größer ist als der Durchmesser der Mischkammer (2).

## Claims

1. Deflector mixing head for a reaction moulding machine comprising a mixing chamber (2) with a control piston (12) for regulating the inflow of components and an outlet chamber (10) arranged downstream from and transversely to the mixing chamber (2), with a cleaning piston (28) for controlling opening and closing of the mixing chamber-side inlet of the outlet chamber (10), a connecting chamber (8) substantially axially parallel to the outlet chamber (10) being disposed between the mixing chamber and outlet chamber (2, 10), with a displacement piston (20) reciprocating parallel to the cleaning piston (28) for emptying the connecting chamber (8), **characterised in that** deflector elements (22) are positioned in the flow path between the inlet and outlet side of the connecting chamber (8).

2. Deflector mixing head according to claim 1, **characterised in that** the connecting chamber (8) is attached to the mixing chamber (2) at the inlet side on the side opposite the outlet chamber.

3. Deflector mixing head according to claim 1 or 2, **characterised in that** the connecting chamber (8) opens into the outlet chamber (10) via an annular gap (30) which is variably adjustable by means of the cleaning piston (28).

4. Deflector mixing head according to any of the preceding claims, **characterised in that** the displacement piston (20) is variably adjustable in the lifting direction of the piston for variable control of the flow cross-section of the connecting chamber (8).

5. Deflector mixing head according to any of the preceding claims, **characterised in that** the deflecting elements (22) are connected in a fixed manner to the displacement piston (20) and guided with a sliding and sealing fit in corresponding receiving bores (24) disposed in the delimiting wall (26) of the connection chamber (8) opposite the displacement piston.

6. Deflector mixing head according to any of the preceding claims, **characterised in that** mixer pins decreasing in diameter but increasing in number in the direction of flow from the inlet to the outlet side of the connecting chamber (8) and arranged in an offset staggered pattern are provided as deflecting elements (22).

7. Deflector mixing head according to any of the preceding claims, **characterised in that** the diameter of the deflecting element (22) disposed in front of the outlet opening of the mixing chamber (2) is greater that the diameter of the mixing chamber (2).

## Revendications

1. Tête de mélange déflectrice destinée à une machine pour moulage par réaction, avec une chambre de mélange (2) y compris un piston de commande (12) régulant l'afflux des composants et une chambre de sortie (10) placée en aval de la chambre de mélange (2) et disposée en diagonale de celle-ci avec un piston de nettoyage (28) se dirigeant vers et contre l'orifice d'entrée de la chambre de sortie (10) se trouvant du côté de la chambre de mélange, une chambre de liaison (8) parallèle pour l'essentiel à l'axe de la chambre de sortie (10) étant disposée entre la chambre de mélange et la chambre de sortie (2, 10) avec un piston déplaceur (20) effectuant un mouvement ascensionnel parallèlement au piston de nettoyage (28) destiné à vider la chambre de liaison (8), **caractérisée en ce que** des éléments déflecteurs (22) positionnés dans la voie d'écoulement sont disposés entre le côté entrée et le côté sortie de la chambre de liaison (8) .

2. Tête de mélange déflectrice selon la revendication 1, **caractérisée en ce que** la chambre de liaison (8) est raccordée à la chambre de mélange (2) du côté entrée sur le côté en face de la chambre de sortie.

3. Tête de mélange déflectrice selon la revendication 1 ou 2, **caractérisée en ce que** la chambre de liaison (8) débouche sur une fente annulaire (30) réglable de manière variable par le piston de nettoyage (28) dans la chambre de sortie (10).

4. Tête de mélange déflectrice selon l'une quelconque des revendications précédentes, **caractérisée en ce que** le piston déplaceur (20) est réglable de manière variable pour la commande variable de la section d'écoulement de la chambre de liaison (8) dans le sens de la course.

5. Tête de mélange déflectrice selon l'une quelconque des revendications précédentes, **caractérisée en ce que** les éléments déflecteurs (22) sont reliés au piston déplaceur (20) avec un mouvement fixe et sont guidés dans l'ajustement glissant et étanche dans des perçages de positionnement (24) correspondants dans la paroi de délimitation (26) de la chambre de liaison (8) en face du piston déplaceur.

6. Tête de mélange déflectrice selon l'une quelconque des revendications précédentes, **caractérisée en ce que** des tiges de mélange à diamètre décroissant, cependant croissant en fonction du nombre et décalées en quinconce dans le sens de l'écoulement du côté entrée au côté sortie de la chambre de liaison (8) sont prévues sous forme d'éléments déflecteurs (22).

7. Tête de mélange déflectrice selon l'une quelconque des revendications précédentes, **caractérisée en ce que** le diamètre des éléments déflecteurs (22) disposés en amont de l'orifice de sortie de la chambre de mélange (2) est supérieur au diamètre de la chambre de mélange (2).
